# EUROPEAN PATENT SPECIFICATION

(11) **EP 3 065 014 B1**
(45) Date of publication and mention of the grant of the patent: **11.11.2020**
(21) Application number: 15157171.8
(22) Date of filing: 02.03.2015
(51) Int. Cl.: G05B 19/418, B65G 43/10

(54) **Method and arrangement for synchronizing operation of actuators**
Verfahren und Anordnung zum Synchronisieren des Betriebs von Aktuatoren
Procédé et système de synchronisation du fonctionnement des actionneurs

(43) Date of publication of application: 07.09.2016
(73) Proprietor: ABB Schweiz AG, 5400 Baden (CH)
(72) Inventor: Maksimainen, Petri, 00380 Helsinki (FI); Nousiainen, Tero, 00380 Helsinki (FI); Karjalainen, Olli-Petteri, 00380 Helsinki (FI)
(74) Representative: Kolster Oy Ab

(56) References cited:
- EP-A2- 2 717 107
- US-A1- 2008 082 206
- US-A1- 2013 057 193
- US-B1- 6 483 270

## Description

### FIELD

The present disclosure relates to synchronizing operation of actuators in systems comprising a plurality of actuators, and particularly to position-synchronized operation of conveyors.

### BACKGROUND INFORMATION

In various industrial applications, position-synchronized operation of actuators may be required. The actuators may be conveyors for transporting materials in a larger conveyor system, for example. In order to be able to track advancement of objects along the conveyors of the conveyor system, the conveyors may be position-synchronized with respect to each other. US Patent Application US2008/082206 discloses, exemplary, an automated control system for a conveying system.

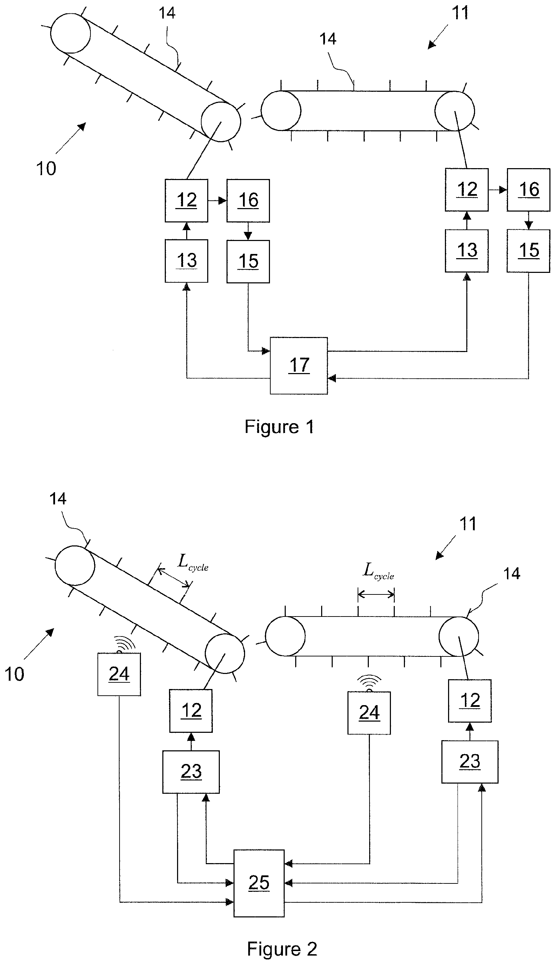

Figure 1 shows an example of a conventional position-synchronized conveyor system of a saw mill. In Figure 1, the conveyor system comprises two rake conveyors 10 and 11. The conveyors are moved by electric motors 12 which are controlled by frequency converters 13 on the basis of references the frequency converters receive from a controller 17. Rakes 14 divide the conveyors 10 and 11 into slots into which different type of objects, such as planks of different lengths, can be sorted. The operation of the conveyors 10 and 11 is synchronized so that the sorted order of the objects advancing on the conveyors 10 and 11 can be maintained.

In order to be able to synchronize actuators, positions of actuators may be detected. For this purpose, motors moving the actuators may be equipped with encoders. In Figure 1, electric motors 12 rotating the rake conveyors 10 and 11 are coupled with encoders 15. The encoders 15 are connected to the motors 12 through gears 16 through which rotations of the motors 12 can be translated into normalized position information. In Figure 1, a controller 17 receives the position information from the encoders 15 and adjusts the references it supplies to the frequency converters 13 accordingly. Thus, the operation of the conveyors 10 and 11 can be synchronized.

However, encoders and gears may require maintenance and may increase the cost of the system.

### BRIEF DISCLOSURE

An object of the present invention is to provide a method and an arrangement for implementing the method so as to alleviate the above disadvantages. The objects of the invention are achieved by a method and an arrangement which are characterized by what is stated in the independent claims. Preferred embodiments of the invention are disclosed in the dependent claims.

It is possible to estimate a position of an actuator on the basis of the rotational speed of an electric motor moving the actuator. The rotational speed may be estimated from the electric quantities (e.g. voltages and currents) supplied to the motor. However, estimating the position directly on the basis of the speed estimate may not give reliable results. Since position is the integral of speed, an error in a position estimate generated in this manner may accumulate.

If each of the actuators comprises at least one position indicator periodically indicating the position, the error can be detected and compensated for. The position indicator may be a simple indicator that periodically indicates that the actuator has reached a certain sensor position. For example, in a rake conveyor system, the rakes of conveyors may act as position indicators. A rake passing by a certain, predetermined position can be detected by using an optical or capacitive sensor, for example.

If the speed estimate is sufficiently accurate within a period between two position indications, the position/motion of the actuator can be continuously tracked and controlled. A time difference between time instants of position indicators passing their sensor positions may be detected and the rotational speed of an electric motor of at least one actuator may be controlled on the basis of the time difference, for example. As a result, the positions of a plurality of actuators may be synchronized.

Thus, a method according to the present disclosure may be implemented without using encoders (and encoder gears).

### BRIEF DESCRIPTION OF THE DRAWINGS

In the following, the invention will be described in greater detail by means of preferred embodiments with reference to the attached drawings, in which
Figure 1 shows an example of a conventional position-synchronized conveyor system of a saw mill; and
Figure 2 shows an exemplary embodiment of an arrangement implementing a method according to the present disclosure.

### DETAILED DISCLOSURE

The present disclosure describes a method of synchronizing positions of at least two actuators. The actuators may be actuated with electric motors which are controlled by frequency converters. The actuators may be conveyors, for example.

In a method according to the present disclosure, a position of each actuator may be estimated. In some embodiments, the frequency converters may provide these estimates. For example, the frequency converters may be used for estimating rotational speeds of the motors, and the positions may be estimated on the basis of the rotational speeds.

In addition, for each actuator, at least one position indicator may be used in or on the actuator for detecting a time instant of the actuator reaching the certain position. A position indicator may be a simple marker on the actuator and periodically pass by a sensor, for example. The marker may be attached to the actuator or it may be an integral part of the actuator, for example. In the case of a rake conveyor, each rake of the conveyor may act as a position indicator passing by an optical sensor, for example. A rising (or falling) edge of a sensor signal may be used for indicating a position indication time instant, for example.

In a method according to the present disclosure, the rotational speed of at least one of the electric motors may be controlled on the basis of the estimated positions of the actuators. A method according to the present disclosure may further comprise calculating at least one position indication time difference between the detected position indication time instants, and adjusting the rotational speed of at least one of the electric motors on the basis of the at least one calculated position indication time difference. The motor may be controlled to achieve a desired position indication time difference between the detected position indication time instants of the at least two actuators, for example. One of the actuators may be selected as a master actuator while the other actuator/s may act as a slave actuator/s. When a desired time difference between a detected master position indication time instant and a slave position indication time instant is reached, the master actuator and the slave actuator run in synchrony. In some embodiments, the desired time difference may be zero. In other embodiments, a non-zero time value for the desired time difference may be used. For example, a non-zero time difference may be used when it would be mechanically difficult or impossible to position sensors such that the position indicators would pass by the sensor simultaneously when the actuators are in synchrony.

A desired position indication time difference between position indication time instants of two actuators may be achieved by controlling the rotational speed of at least one of the electric motors on the basis of the time difference. For example, a PI controller may control the rotational speed of a motor of a slave actuator with respect to the rotational speed of a motor of a master actuator so that the time difference between position indications of the master and the slave is brought to a desired time difference level.

Alternatively, a method according to the present disclosure may further comprise, for each of the at least two actuators, a step of calculating a position estimate on the basis of the estimated rotational speeds and the detected position indication time instants. The position estimates may be approximated from the estimated rotational speeds and adjusted on the basis of the periodical position indication time instants. Then, on the basis of the position estimates, a position difference may be calculated, and the position difference may be controlled to a desired level by adjusting the rotational speed of at least one of the motors moving the actuators. One of the actuators may be selected as a master actuator and the other or others may act as the slave actuators. The position of the master may serve as a position reference for the slave/s.

In a method according to the present disclosure, the precision of the achieved synchrony depends on the accuracy of the estimated rotational speeds of the motors and the length of the period of the periodical position indications. If the accuracy of the estimated rotational speed of a motor moving an actuator is poor, the position indications of the actuator may be configured to occur more often.

The present disclosure further describes an arrangement for synchronizing positions of at least two actuators. Each of the at least two actuators may be actuated with an electric motor that is controlled by a frequency converter. The frequency converter may be configured to estimate a rotational speed of the motor. The at least two actuators may be conveyors for transporting materials, for example. The materials may include any material suitable for being transported on a conveyor.

An arrangement according to the present disclosure comprises, for each of the at least two actuators, at least one position indicator in or on the actuator. The position indicator indicates when the actuator reaches a certain position. The arrangement also comprises a sensor for sensing the at least one position indicator so that a time instant of the actuator reaching the certain position can be detected.

An arrangement according to the present disclosure may comprise means for controlling the rotational speed of at least one of the electric motors on the basis of the estimated positions of the actuators. A frequency converter for controlling a motor that actuates an actuator may act as such means, for example. An arrangement according to the present disclosure may further comprise means for calculating at least one position indication time difference between the detected position indication time instants, and means for adjusting the rotational speed of at least one of the electric motors on the basis of the at least one position indication time difference. The motor may be controlled to achieve a desired position indication time difference between the detected position indication time instants of the at least two actuators, for example. The means for calculating the at least one position indication time difference may be formed by control means implemented on a separate controller or on a control circuitry of one or more of the frequency converters, for example. The means for controlling at least one of the electric motors may be formed by control means that generate references on the basis of the at least one position indication time difference and by frequency converters carrying out the references, for example.

Figure 2 shows an exemplary embodiment of an arrangement implementing a method according to the present disclosure. In Figure 2, conveyors 10 and 11 act as the position-synchronized actuators. The conveyors 10 and 11 may form a part of a conveyor system in a saw mill, for example. The conveyors are actuated with electric motors 12 which are controlled by frequency converters 23. The frequency converters 23 are configured to estimate the rotational speeds of the motors 12.

In Figure 2, the conveyors 10 and 11 are rake conveyors that both comprise a plurality of rakes 14. The rakes 14 act as position indicators. As the conveyors 10 and 11 rotate, each rake 14 passes by a sensor 24. The sensors 24 are configured to detect a rake 14 reaching a certain, predetermined position. Depending on the implementation of the rake conveyor or rake conveyors, different sensing methods may be used. The sensors may be optical or capacitor sensors, for example.

With the information provided by the sensors 24, position indication time instants of the rakes passing by the sensors can be determined. The arrangement of Figure 2 comprises a controller 25 that receives information on these time instants and calculates a position indication time difference between the detected time instants. In Figure 2, the controller 25 is a separate controller. Alternatively, it may be implemented in the control circuitry of one or more of the frequency converters 23. The controller 25 provides speed references for the frequency converters 23.

In Figure 2, the conveyor 10 acts as a master. The controller 25 provides the frequency converter 23 of master conveyor 10 with a master conveyor speed reference. The other conveyor 11 acts as a slave. The controller 25 controls the rotational speed of the slave conveyor 11 on the basis of the calculated position indication time difference between the position indication time instants of the master conveyor 10 and the slave conveyor 11 in order to achieve a desired position indication time difference between the position indication time instants. The controller 25 may provide the frequency converter 23 of the slave conveyor 10 with the master conveyor speed reference but may adjust the reference on the basis of the calculated timed difference, for example.

In the exemplary embodiment of Figure 2, the rakes 14 are distributed at even distances *L_{cycle}* on the conveyors 10. In this manner, the conveyors require minimal initial aligning at start-up. However, the distances between position indicators of a conveyor do not have to be same. If at least one position indicator on each conveyor can be identified from among other position indicators on the conveyor, the conveyors may be aligned at start-up, and the synchrony of the conveyors may be maintained by using a method/arrangement according to the present disclosure.

In Figure 2, actuators in the form of position-synchronized conveyors are shown. However, an arrangement according to the present disclosure may comprise any plurality of position-synchronized actuators. One actuator may be selected to serve as a master that provides a reference for all other actuators in the arrangement. Alternatively, the actuators may be cascaded into a daisy chain. Each actuator may receive a reference from another actuator while at the same time providing a reference to yet another actuator.

Although the present disclosure mainly discusses synchronization of material transporting actuators of conveyor systems, a method according to the present disclosure may also be used in other types of applications requiring synchronized motion or positioning of actuators. The concept of a position of an actuator may include orientation of an actuator or progress within an operational cycle of an actuator, for example. A method according to the present disclosure may be used for synchronizing eccentrics of a vibrating separator screen or a vibrating conveyor, for example.

It will be obvious to a person skilled in the art that the inventive concept can be implemented in various ways. The invention and its embodiments are not limited to the examples described above but may vary within the scope of the claims.

## Claims

1. A method of synchronizing positions of at least two actuators, wherein the actuators are driven with electric motors which are controlled by frequency converters, and wherein the method comprises, for each actuator,
using the frequency converter for estimating a position of the actuator by estimating the rotational speed of the motor, and
detecting a time instant of the actuator reaching a certain position by using at least one position indicator in or on the actuator, and
wherein the method further comprises
controlling a rotational speed of at least one of the electric motors on the basis of the estimated positions of the actuators,
calculating at least one time difference between the detected time instants of the at least two actuators reaching their certain positions, and
adjusting the rotational speed of the at least one of the electric motors on the basis of the at least one calculated time difference for synchronizing positions of the at least two actuators.

2. An arrangement for synchronizing positions of at least two actuators, wherein each of the at least two actuators is driven with an electric motor controlled by a frequency converter, wherein the frequency converter is configured to estimate a position of the actuator by estimating the rotational speed of the motor, and wherein the arrangement comprises, for each of the at least two actuators,
at least one position indicator in or on the actuator for indicating the actuator reaching a certain position,
a sensor for sensing the at least one position indicator in order to detect a time instant of the actuator reaching the certain position, and
wherein the arrangement further comprises
means for controlling a rotational speed of at least one of the electric motors on the basis of the estimated positions of the actuators,
means for calculating at least one time difference between the detected time instants, and
means for adjusting the rotational speed of the at least one of the electric motors on the basis of the at least one time difference for synchronizing positions of the at least two actuators.

3. An arrangement according to claim 2, wherein the at least two actuators are conveyors for transporting materials.

4. An arrangement according to claim 2 or 3, wherein
at least one actuator is a rake conveyor,
a rake of the rake conveyor acts as the at least one position indicator, and
the sensor is configured to detect a time instant of the rake reaching a certain position.

5. An arrangement according to any one of claims 2 to 4, wherein the arrangement is a conveyor system of a saw mill.

## Patentansprüche

1. Verfahren zum Synchronisieren von Positionen von mindestens zwei Aktuatoren, wobei die Aktuatoren mit Elektromotoren angetrieben werden, die durch Frequenzumrichter gesteuert werden, und wobei das Verfahren für jeden Aktuator Folgendes umfasst:
Verwenden des Frequenzumrichters zum Schätzen einer Position des Aktuators durch Schätzen der Drehzahl des Motors und
Detektieren eines Zeitpunkts, zu dem der Aktuator eine bestimmte Position erreicht, durch Verwenden mindestens eines Positionsindikators in oder an dem Aktuator, und
wobei das Verfahren ferner Folgendes umfasst:
Steuern einer Drehzahl mindestens eines der Elektromotoren auf der Basis der geschätzten Positionen der Aktuatoren,
Berechnen mindestens einer Zeitdifferenz zwischen den detektierten Zeitpunkten, zu denen die mindestens zwei Aktuatoren ihre bestimmten Positionen erreichen, und
Anpassen der Drehzahl des mindestens einen der Elektromotoren auf der Basis der mindestens einen berechneten Zeitdifferenz zum Synchronisieren von Positionen der mindestens zwei Aktuatoren.

2. Anordnung zum Synchronisieren von Positionen von mindestens zwei Aktuatoren, wobei jeder der mindestens zwei Aktuatoren mit einem durch einen Frequenzumrichter gesteuerten Elektromotor angetrieben wird, wobei der Frequenzumrichter ausgelegt ist zum Schätzen einer Position des Aktuators durch Schätzen der Drehzahl des Motors, und wobei die Anordnung für jeden der mindestens zwei Aktuatoren Folgendes umfasst:
mindestens einen Positionsindikator in oder an dem Aktuator zum Angeben, dass der Aktuator eine bestimmte Position erreicht,
einen Sensor zum Erfassen des mindestens einen Positionsindikators, um einen Zeitpunkt zu detektieren, zu dem der Aktuator die bestimmte Position erreicht, und
wobei die Anordnung ferner Folgendes umfasst:
Mittel zum Steuern einer Drehzahl mindestens eines der Elektromotoren auf der Basis der geschätzten Positionen der Aktuatoren,
Mittel zum Berechnen mindestens einer Zeitdifferenz zwischen den detektierten Zeitpunkten und
Mittel zum Anpassen der Drehzahl des mindestens einen der Elektromotoren auf der Basis der mindestens einen Zeitdifferenz zum Synchronisieren von Positionen der mindestens zwei Aktuatoren.

3. Anordnung nach Anspruch 2, wobei es sich bei den mindestens zwei Aktuatoren um Fördereinrichtungen zum Transportieren von Materialien handelt.

4. Anordnung nach Anspruch 2 oder 3, wobei
es sich bei mindestens einem Aktuator um einen Rechenförderer handelt,
ein Rechen des Rechenförderers als der mindestens eine Positionsindikator dient und
der Sensor ausgelegt ist zum Detektieren eines Zeitpunkts, zu dem der Rechen eine bestimmte Position erreicht.

5. Anordnung nach einem der Ansprüche 2 bis 4, wobei es sich bei der Anordnung um ein Fördersystem eines Sägewerks handelt.

## Revendications

1. Procédé de synchronisation des positions d'au moins deux actionneurs,
ces actionneurs étant entraînés avec des moteurs électriques qui sont commandés par des convertisseurs de fréquence, et ce procédé comprenant, pour chaque actionneur,
l'utilisation du convertisseurs de fréquence pour estimer une position de l'actionneur en estimant la vitesse de rotation du moteur, et
la détection d'un instant temporel auquel l'actionneur a atteint une certaine position en utilisant au moins un indicateur de position dans ou sur l'actionneur, et ce procédé comprenant en outre :
la commande d'une vitesse de rotation d'au moins un des moteurs électriques en se basant sur les positions estimées des actionneurs,
le calcul d'au moins une différence de temps entre les instants temporels détectés auxquels les au moins deux actionneurs ont atteint leurs certaines positions, et
le réglage de la vitesse de rotation de l'au moins un des moteurs électriques en se basant sur l'au moins une différence de temps calculée pour synchroniser les positions des au moins deux actionneurs.

2. Système pour synchroniser les positions d'au moins deux actionneurs, chacun de ces au moins deux actionneurs étant entraîné avec un moteur électrique commandé par un convertisseur de fréquence, ce convertisseur de fréquence étant configuré de façon à estimer une position de l'actionneur en estimant la vitesse de rotation du moteur, et ce système comprenant, pour chacun des au moins deux actionneurs, au moins un indicateur de position dans ou sur l'actionneur pour indiquer que l'actionneur a atteint une certaine position,
un capteur pour capter l'au moins un indicateur de position afin de détecter un instant temporel auquel l'actionneur a atteint cette certaine position, et
ce système comprenant en outre :
un moyen pour commander une vitesse de rotation d'au moins un des moteurs électriques en se basant sur les positions estimées des actionneurs,
un moyen pour calculer au moins une différence de temps entre les instants temporels détectés, et
un moyen pour régler la vitesse de rotation de l'au moins un des moteurs électriques en se basant sur l'au moins une différence de temps pour synchroniser les positions des au moins deux actionneurs.

3. Système selon la revendication 2, dans lequel les au moins deux actionneurs sont des transporteurs pour transporter des matériaux.

4. Système selon la revendication 2 ou 3, dans lequel
au moins un actionneur est un transporteur à séparateurs,
un séparateur du transporteur à séparateurs agissant comme l'au moins un indicateur de position, et
le capteur étant configuré de façon à détecter un instant temporel auquel le séparateur a atteint une certaine position.

5. Système selon l'une quelconque des revendications 2 à 4, ce système étant un système transporteur d'une scierie.
